# EUROPEAN PATENT APPLICATION

(11) **EP 0 899 946 A2**
(43) Date of publication of application: **03.03.1999**
(21) Application number: 98202724.5
(22) Date of filing: 14.08.1998
(51) Int. Cl.: H04N 5/335

(54) **Image sensor electronics**

(30) Priority: 26.08.1997 US 918739
(71) Applicant: EASTMAN KODAK COMPANY, Rochester, New York 14650 (US)
(72) Inventor: Orlicki, David M., Rochester, New York 14650-2201 (US); Ford, James H., Rochester, New York 14650-2201 (US)
(74) Representative: Parent, Yves

(57) **Abstract**

An active pixel sensor (APS) with an integrated Switched Mode Power Supply (SMPS) controller formed upon a semiconductor substrate that is used by an APS based imager. There is a switch mode power supply (SMPS) controller formed on the semiconductor substrate, that is electrically connected to at least one input terminal on the semiconductor substrate and a linear post regulator formed on the semiconductor substrate that is operatively connected to the voltage output of the SMPS controller.

## Description

### FIELD OF THE INVENTION

The invention relates generally to the field of solid state image sensor electronics and in particular to incorporating power supply voltages on the same semiconductor as the image sensor.

### BACKGROUND OF THE INVENTION

There are numerous prior art disclosures relating to solid state image sensors. Most prevalent among these are Charge Coupled Device (CCD) image sensors. Many CCDs are built with a photodiode and capacitor at each pixel location and means for sequentially transferring the charge from each pixel site to a common charge to voltage output amplifier. However, the silicon fabrication process used for CCD construction is optimized for low noise charge integration and transfer and is not amenable to integration of logic functions. For this reason, CCD imagers require an attendant chip set to provide timing, clock drive, video sampling and video digitization functions as well as a special purpose, low noise power supply system to provide the non-logic level voltages required for CCD charge transfer and analog signal processing.

Active Pixel Sensors (APS) are solid state image sensors that incorporate active devices at pixel locations. Here, photosensors, typically photodiodes, with charge integration capacitors and charge to voltage conversion buffer amplifiers built into each pixel location. The pixel output is read out by multiplexing the pixel voltages through a row and column random access addressing scheme. The inclusion of a buffer amplifier at each pixel introduces variability in image uniformity but eliminates the need to optimize the silicon fabrication process for charge transfer. Moreover, APS sensor fabrication is fully compatible with standard CMOS logic fabrication steps. From a system's integration point of view, this is a distinct advantage over CCD technology in that timing, clock drive, and video processing through digitization can be provided on the he same substrate as the pixel array, thus reducing part count and cost.

Optimal performance of the APS imager may require one or more non-standard voltages relative to standard CMOS logic. These voltages may be used to enhance imager linearity, speed or uniformity and may require relatively low noise operation. Prior art devices have been required to supply these voltages from a source external to the image sensor itself. This requires additional parts for an imaging system that consume space and add cost to the system.

There exist within the prior art a number of semiconductor disclosures which teach the incorporation of supply voltages onto the semiconductor die itself. Ohtsuski (U.S. Patent 5,592,430) discloses a semiconductor device which includes a simple stable internal supply switching circuit for selectively supplying different power voltages.

Itoh et al. (U.S. Patent 4,482,985) discloses a semiconductor integrated circuit which comprise three circuits for handling the external power supply.

In view of the foregoing discussion, it should be apparent that there remains a need within the art for a CMOS based APS sensor that has supply voltages provided on the device.

### SUMMARY OF THE INVENTION

The present invention is directed to overcoming one or more of the problems set forth above. The invention is the inclusion of a Switched Mode Power Supply (SMPS) controller topology on the APS die that is capable of converting input power at one or more voltages to the suite of voltages required for optimal APS performance. The SMPS outputs are linearly post regulated on chip to insure low noise performance. In the event that the input voltage is higher than that required to drive the post regulator(s), the SMPS controller is disabled and the input voltage applied directly to the post regulator(s). Thus, the imager is enabled to run on a power source with a wide output voltage range such as a battery pack running from fresh to end of life condition.

Briefly summarized, according to one aspect of the present invention an active pixel sensor (APS) with an integrated Switched Mode Power Supply (SMPS) controller comprising: a semiconductor substrate having an APS based imager formed thereon; a switch mode power supply (SMPS) controller formed on the semiconductor substrate, the SMPS controller being electrically connected to at least one input terminal on the semiconductor substrate; and a linear post regulator formed on the semiconductor substrate and operatively connected to the SMPS controller.

These and other aspects, objects, features, and advantages of the present invention will be more clearly understood and appreciated from a review of the following detailed description of the preferred embodiments and appended claims, and by reference to the accompanying drawings.

### Advantages Effect Of The Invention

The invention reduces system part count and cost relative to existing art implementations by eliminating the need for a separate power converter and/or conditioning system to enable APS operation.

### BRIEF DESCRIPTION OF THE DRAWINGS

Fig. 1 is a block diagram of a typical APS imager implementation existing within the prior art.
Fig. 2 is a schematic representation of the invention showing the inclusion of the SMPS controller on the imager.
Fig. 3 is a block diagram of a Switched Inductor Power Supply APS Image System.
Fig. 4 is a block diagram of a Switched Capacitor Power Supply APS Image System.

To facilitate understanding, identical reference numerals have been used, where possible, to designate identical elements that are common to the figures.

### DETAILED DESCRIPTION OF THE INVENTION

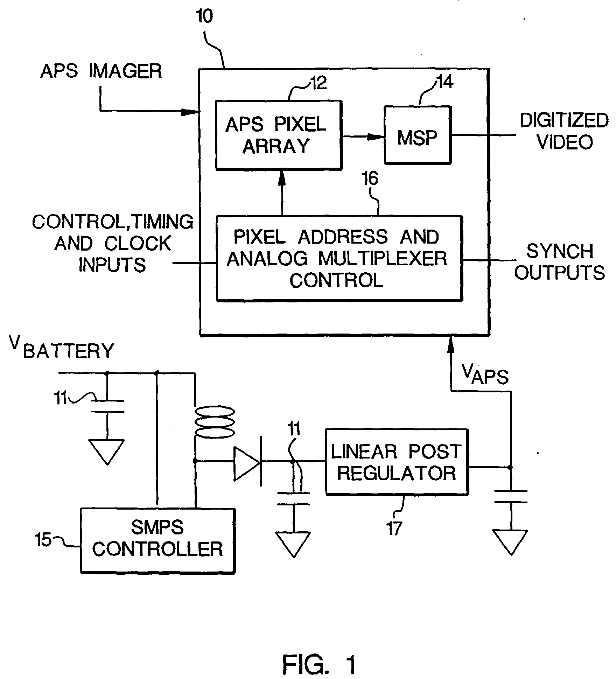

A schematic representation of an existing art implementation of an APS imager 10 is shown in Figure 1. The APS imager 10 incorporates the pixel array 12, including pixel site amplification, as well as pixel address and multiplexing control 16 as well as analog to digital processing electronics on mixed signal processor 14 upon a monolithic semiconductor substrate. The power supply of the imager is derived from an external power conditioner shown in Figure 1, for example, as a boost converter SMPS controller 15. The relatively noise sensitive analog processing sections of the APS imager 10 may require linear post regulator 17 to provide regulation of SMPS controller 15 output. The SMPS controller 15 shown in Figure 1 typically employs an inductive element in a boost configuration. Inductively based schemes in buck, flyback and other configurations are common, depending on the nature of the input power source and the voltage level(s) and noise quality requirements of the sensor. It is also possible to provide SMPS controller 15 functionality in the form of a charge pump system which uses capacitors rather than inductors for level translation.

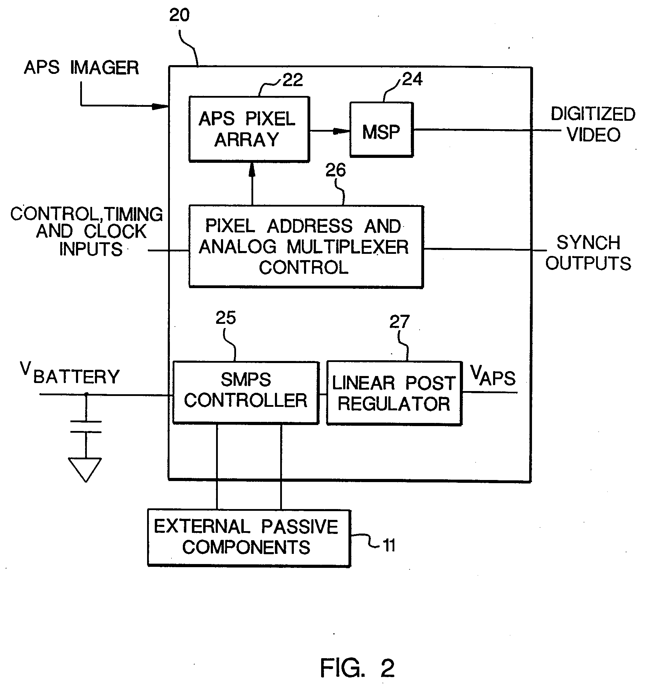

A block diagram representation of an APS imager 20 as envisioned by the present invention is shown in Fig. 2. The APS imager 20 incorporates the pixel array 22, including pixel site amplification, as well as pixel address and multiplexing control 16 as well as going to digital processing electronics on mixed signal processor 14 upon a monolithic substrate. The SMPS controller 25, whether for and inductive or capacitive converter, is integrated onto the same semiconductor chip as the APS imager 20. Additionally, external components may be required, depending on SMPS topology. The configuration shown in Fig. 2 reduces active silicon part count and enables customization of power conditioning for internal subsystems at minimal package pin count. An internal linear post regulator 27 is employed to minimize supply ripple to sensitive image capture and conversion elements.

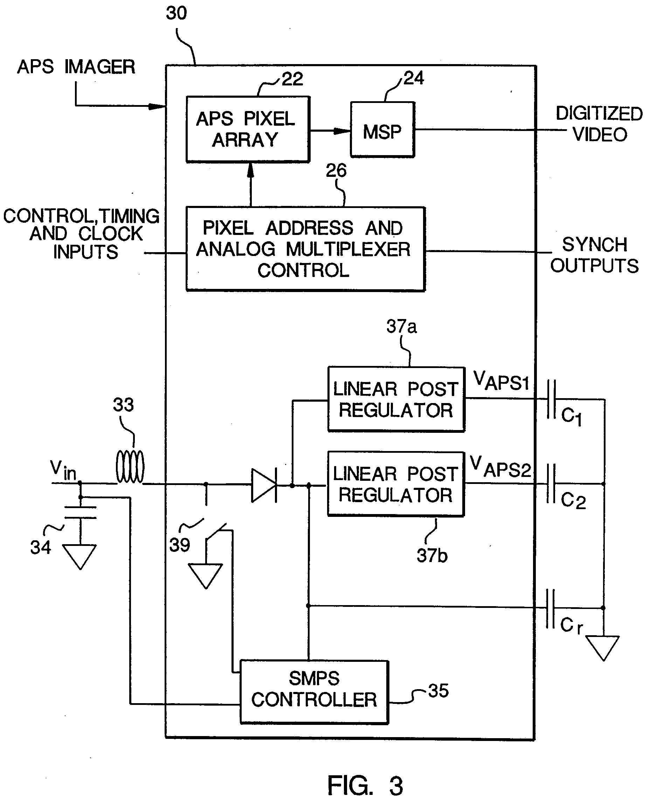

A more detailed depiction of an inductively based system is shown in Fig. 3 wherein APS image sensor 30 requires multiple (2) internal voltages for optimal operation. As shown in Fig. 3 APS pixel array 22, Pixel Address and Analog multiplexer control 26 and MSP 24 provide the same functions as described previously. This is the preferred embodiment of the invention. Generally speaking, V_{in,} is received filtered by capacitor 34, and indicator 33, and will be less than the voltage required to operate the APS device and the SMPS controller 35 will pulse width modulate the closure of switch 39 to boost the voltage generated on C_{T} to a voltage greater than the greatest V_{APS} by a margin sufficient to insure proper operation of linear post regulators 37a and 37b. If Vᵢₙ is sufficiently greater than each V_{APS}, the switch 39 remains open and the post regulators step the input voltage down to V_{APS}. External capacitors C₁ and C₂ are required for proper operation of the post regulators.

The power conditioning system shown in Figure 3 can provide multiple internal voltages as required to optimize imaging performance from a single voltage power source and accommodate Vᵢₙ over a large range extending from below to above the voltages required in the existing art while all active elements are integrated onto the sensor die.

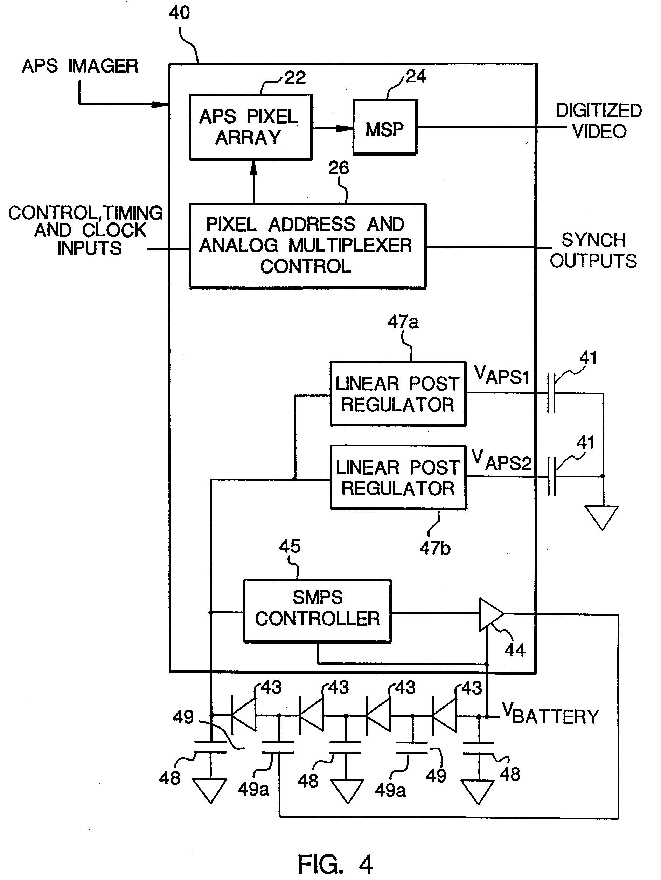

An alternate embodiment of the invention is shown in Fig. 4, wherein APS pixel array 22, Pixel Address and Analog multiplexer control 26 and MSP 24 provide the same functions as described previously. The basic architecture of Figure 3 is employed within Fig. 4. However, in Fig. 4, the voltage boost is provided by a switched capacitor multiplier system having diodes 43 separate the system into stages. The configuration shown in Fig. 4 is that of a voltage tripler with capacitors 48 in three spots. Buffer/driver 44 is a power switch element capable of active pull up to V_{BATT} and active pull down to GND. The output of buffer/driver 44 alternately pulls the lower plates 49a of capacitors 49 from V_{BATT} to GND with a duty cycle dependent on the SMPS controller. When the lower plates 49a are at GND potential, charge is allowed to flow through diodes 43. When the lower plates 49a are elevated to V_{BATT}, charge flows forward to down stream stages. The accumulated charge at the last stage results in an output voltage delivered to the linear regulators 47a, and 47b and sensed at the input of the SMPS controller to close the regulation control loop. Similarly to the inductively based system of Figure 3, if V_{battery} is great enough so as to require no boost, it may be applied directly to the inputs of linear post regulators 47a, 47b and the SMPS controller 45 will remain dormant. The desired voltages, V_{APS1} and V_{APS2} are delivered through capacitors 41.

The invention has been described in detail with particular reference to certain preferred embodiments thereof, but it will be understood that variations and modifications can be effected within the spirit and scope of the invention.

### PARTS LIST

- 10: APS Imager
- 11: external passive components
- 12: pixel array
- 14: mixed signal processor
- 16: pixel address and multiplexer control
- 17: linear post regulator
- 18:
- 20: APS imager
- 22: APS pixel array
- 24: mixed signal processor
- 25: SMPS controller
- 26: pixel address and analog control
- 27: linear post regulator
- 28:
- 30: APS imager
- 33: inductor
- 34: capacitor
- 35: SMPS controller
- 36:
- 37a: linear post regulator
- 37b: linear post regulator
- 39: switch
- 40: APS imager
- 41: capacitor
- 43: diode
- 44: buffer amplifier
- 45: SMPS controller
- 47a: linear post regulator
- 47b: linear post regulator
- 48: capacitor
- 49: capacitor
- 49a: lower plate of capacitor

## Claims

1. An active pixel sensor (APS) with an integrated Switched Mode Power Supply (SMPS) controller comprising:
a semiconductor substrate having an APS based imager formed thereon;
a switch mode power supply (SMPS) controller formed on the semiconductor substrate, the SMPS controller being electrically connected to at least one input terminal on the semiconductor substrate; and
a linear post regulator formed on the semiconductor substrate and operatively connected to the SMPS controller.

2. The sensor of claim 1 wherein the SMPS controller generates a single voltage for internal use.

3. The sensor of claim 1 wherein the SMPS controller generates multiple voltages for internal use.

4. The sensor of claim 1 further comprising a plurality of linear post regulators integrated on the APS die which act on voltages generated by the SMPS controller.

5. The sensor of claim 1 further comprising a buffer/driver operatively connected to the SMPS to perform as a power switch element in response to signals from the SMPS.

6. The sensor of claim 8 further comprising a voltage multiplier operatively connected to the buffer/driver.

7. A method of making an active pixel sensor (APS) with an integrated Switched Mode Power Supply (SMPS) controller comprising the steps of:
providing a semiconductor substrate having an APS based imager formed upon the substrate;
integrating a switch mode power supply (SMPS) controller within the semiconductor substrate, such that the SMPS controller is electrically connected to at least one input terminal on the semiconductor substrate; and
further integrating a linear post regulator upon the semiconductor substrate such that the linear post regulator is operatively connected to the SMPS controller.

8. The method of claim 7 wherein the step of integrating an SMPS controller further comprises integrating the SMPS controller such that it drives an inductive element to convert input power.

9. The sensor of claim 7 wherein the step of integrating an SMPS controller further comprises integrating the SMPS controller such that it drives a capacitive voltage multiplier to convert input power.

10. The sensor of claim 1 wherein the step of further integrating comprises providing a switched voltage multiplier between the SMPS and the linear post regualtor.
